# FASCICULE DE BREVET EUROPEEN

(11) **EP 1 851 512 B1**
(45) Date de publication et mention de la délivrance du brevet: **28.08.2013**
(21) Numéro de dépôt: 06709364.1
(22) Date de dépôt: 22.02.2006
(51) Int. Cl.: G01D 5/14

(54) **CAPTEUR MAGNETIQUE DE POSITION SANS CONTACT**
KONTAKTLOSER MAGNETISCHE POSITIONSGEBER
CONTACTLESS MAGNETIC POSITION SENSOR

(30) Priorité: 24.02.2005 FR 0501897
(43) Date de publication de la demande: 07.11.2007
(73) Titulaire: Moving Magnet Technologies M.M.T., 25000 Besançon (FR)
(72) Inventeur: GANDEL, Pierre, F-25660 Montfaucon (FR); FRACHON, Didier, F-25000 Besançon (FR); JERANCE, Nicola, OX2 OBN Oxford (GB)
(74) Mandataire: Breesé, Pierre
(86) Numéro de dépôt international: PCT/FR2006/000403
(87) Numéro de publication internationale: WO 2006/090064

(56) Documents cités:
- US-A1- 2003 090 265
- US-A1- 2004 095 131

## Description

La présente invention concerne le domaine des capteurs magnétiques de position sans contact.

Elle concerne plus spécifiquement les capteurs de la position angulaire d'un élément de transmission ferromagnétique, en rotation autour de son axe, caractérisés par la mesure de la variation de la direction d'un champ magnétique, induite par la rotation de L'élément de transmission.

Les capteurs de cette famille nécessitent une sonde capable de mesurer deux composantes du champ magnétique dans un plan afin de déduire l'angle par un calcul d'arctangente, par exemple une sonde à effet Hall avec un concentrateur de flux intégré (MLX 90316) ou une sonde magnétorésistive.

On connaît, dans l'état de la technique, des capteurs conformes au préambule de la revendication 1 et utilisant le champ engendré par un aimant permanent fixé à une extrémité de l'arbre dont on mesure la position à l'aide d'une sonde magnétorésistive (US6316935, US 2003/0090265 at US2004/0095131).

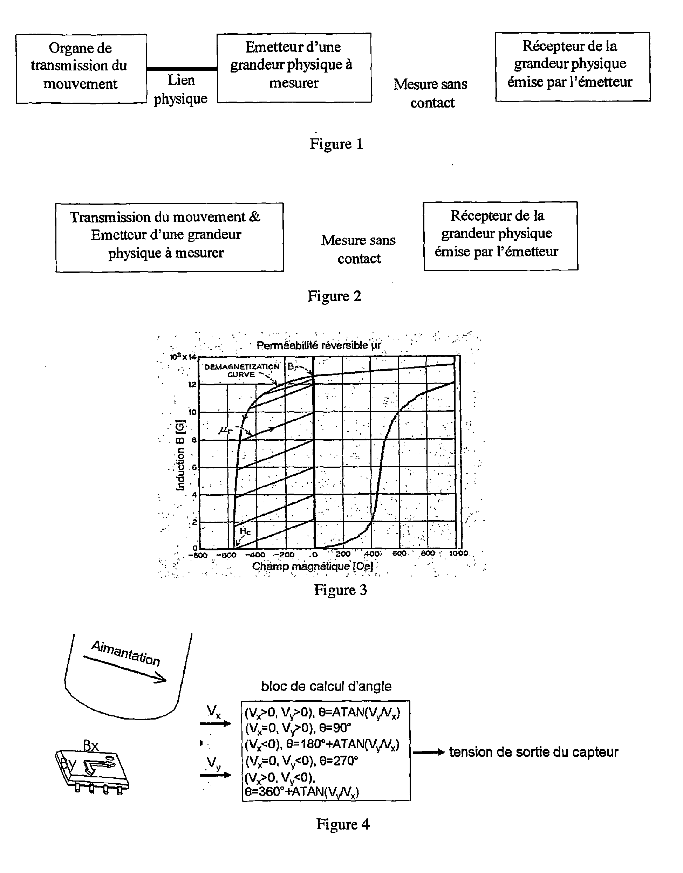

De manière générale, la détection d'un mouvement rotatif ou linéaire sans contact nécessite un minimum de 3 composants arrangés de la façon décrite à la figure 1 :
- un organe de transmission pour transmettre le mouvement à mesurer,
- un émetteur (générateur d'une grandeur physique à mesurer une variable physique tel que le champ magnétique, optique, ultrason, ...),
- un récepteur capable de détecter le signal généré par l'émetteur.

Dans le schéma représenté en figure 1, il existe un lien physique entre l'organe de transmission et l'émetteur.

Le but de l'invention est de simplifier la construction de tels capteurs dans le cas des capteurs magnétiques sans contact en s'affranchissant notamment de l'utilisation d'un aimant permanent.

La suppression de l'aimant dans le cas de capteur magnétique sans contact permet de simplifier la structure, mais permet surtout une diminution du coût d'un tel capteur. Cette diminution de coût est liée à la suppression de certains processus dans la fabrication (surmoulage, collage, ...) remplacés par de simples procédés d'assemblage mécanique. Ces procédés d'assemblages ont également l'avantage de présenter une tenue mécanique aux chocs, vibrations, variations en température, nettement supérieures au collage, la fiabilité d'un tel dispositif en est donc grandement améliorée.

Du point de vue magnétique, le matériau composant l'émetteur doit avoir un champ coercitif suffisant et une perméabilité réversible µr supérieure à 10 (voir figure 3), afin de générer un champ magnétique permettant d'assurer un fonctionnement correct de l'élément magnétosensible, et de minimiser l'influence des champs magnétiques extérieurs qui peuvent perturber le fonctionnement du capteur.

Une simplification supplémentaire consiste en ce que l'organe de transmission remplisse également la fonction d'émission, le capteur est alors constitué :
- d'un organe de transmission remplissant également la fonction d'émission,
- d'un récepteur.

Dans le cas décrit ci-dessus l'élément de transmission ferromagnétique de transmission du mouvement assure également la fonction de générateur de champ (figure 2).

En effet dans les applications nécessitant un capteur rotatif, un élément de transmission est toujours présent pour assurer la rotation et la transmission du mouvement, d'où l'intérêt d'utiliser directement cet axe pour la mesure de position angulaire. La simplification de la structure est donc poussée à l'extrême (un élément de transmission et un élément magnétosensible) ; dans ce cas, le champ magnétique est généré directement par l'élément de transmission dont on souhaite mesurer la position angulaire.

L'invention concerne selon son acception la plus générale un capteur de position angulaire magnétique tel que défini par la revendication 1.

De préférence, ledit matériau ferromagnétique présente un champ coercitif Hc compris entre 30 et 500 oersted.

Selon une variante, l'élément magnétosensible est une sonde magnétorésistive, capable de mesurer les deux composantes du champ magnétique dans le plan perpendiculaire à l'axe de rotation.

Selon une autre variante, l'élément magnétosensible est une sonde GMR (à effet magnétorésistif géant) capable de mesureur les deux composantes du champ magnétique dans le plan perpendiculaire à l'axe de rotation.

Selon une troisième variante, l'élément magnétosensible est une sonde à effet Hall à concentrateur de flux intégrés capable de mesurer le champ magnétique dans le plan perpendiculaire à l'axe de rotation.

Selon une quatrième variante, il est possible d'utiliser une sonde à effet Hall sans concentrateur de flux, du type « Hall vertical » capable également de mesurer le champ magnétique dans le plan perpendiculaire à l'axe de rotation.

Selon un mode de mise en oeuvre particulier, le segment d'extrémité ferromagnétique ayant un champ coercitif Hc inférieur à 500 Oersted présente une section supérieure à la section de l'élément de transmission dont il constitue un prolongement.

Selon un autre mode de réalisation, le segment d'extrémité ferromagnétique ayant un champ coercitif Hc inférieur à 500 Oersted est constitué par un élément cylindrique prolongeant l'élément de transmission du capteur, et présentant une section supérieure à la section de l'élément de transmission dont il constitue un prolongement.

De préférence, l'extrémité de l'élément de transmission présente une extrémité fendue, formant deux branches en un matériau ferromagnétique ayant un champ coercitif Hc inférieur à 500 Oersted.

Avantageusement, ladite extrémité est constituée par une fente présentant deux bras axiaux (7, 8) aimantés axialement dans des sens antiparallèles.

Selon un mode de réalisation particulier, lesdits bras axiaux (7, 8) sont semi-tubulaires.

Selon un autre mode de réalisation, lesdits bras axiaux (7, 8) sont semi-cylindriques.

Selon une variante, lesdits bras axiaux (7, 8) présentent un épaulement annulaire.

Selon une autre variante, chacun desdits bras axiaux (7, 8) présente un épaulement semi-annulaire.

Selon un autre mode de réalisation, les bras axiaux (7, 8) sont entourés par un épaulement annulaire.

Selon une variante, l'élément de transmission présente une extrémité tubulaire creuse, présentant deux protubérances internes disposées radialement et diamétralement opposées, lesdites protubérances étant réalisées en un matériau ferromagnétique ayant un champ coercitif Hc inférieur à 500 Oersted.

Avantageusement, l'élément magnétosensible et le bloc de calcul d'angle sont intégrés en un seul composant.

Pour le bon fonctionnement du capteur, l'élément de transmission doit être rigide. Cet élément de transmission ayant aussi une fonction mécanique (par exemple : élément de transmission de rotation d'une vanne papillon), il doit avoir les propriétés mécaniques correspondantes (résistance mécanique, dureté ...).

Les matériaux qui possèdent les caractéristiques mécaniques et magnétiques les plus avantageuses pour ce type d'application sont les aciers magnétiques (martensitiques ou autres).

En général, les aciers ayant subi une trempe possèdent un champ coercitif plus important (dont la valeur est déterminée par la composition du matériau). On peut citer la référence du matériau Z 33 C 13 (composition : 0,26 - 0,35 % de carbone ; 12,0 - 14,0 % de chrome) dont le champ coercitif est proche de 60 Oe et qui a une bonne résistance mécanique, mais les experts en métallurgie trouveront facilement d'autres matériaux et les traitements associés convenables pour ce genre d'application. La résistance à la corrosion peut également avoir une importance, surtout dans les milieux agressifs.

Bien sûr le choix du matériau ne se limite pas aux matériaux cités ci-dessus, et on peut également mentionner :
- les alliages semi rémanents tel que les alliages de Fer, Cobalt et Vanadium,
- les aciers du type Z 200 C 13.

Nous donnons ci-dessous des exemples de valeurs des paramètres Hc et µr pour divers matériaux :

| Hc [Oe] | *µ*r | |
|---|---|---|
| AlNiCo | 470 à 2000 | 4 à 7 |
| Ferrite | 900 à 3650 | 1.05 à 1.2 |
| Semi-rémanent | 50 à 300 | variable |
| Fer pur | < 5 | > 1000 |
| Acier | < 60 | > 200 |

Le développement de nouvelles technologies dans le domaine des éléments magnétosensibles permet de mesurer le champ magnétique selon deux axes à 90° dans un plan. Ces éléments magnétosensibles peuvent utiliser aussi bien des sondes à effet Hall que des sondes magnétorésistives capables de fournir deux tensions proportionnelles aux composantes X et Y du champ magnétique. Dans ce cadre, il faut mentionner les sondes à effet Hall avec un concentrateur de flux intégré (exemple : sonde 2SA-10 de Sentron-Melexis), où les éléments de Hall mesurent le champ magnétique perpendiculaire à la surface de la sonde. En fait, le champ parallèle à la surface de la sonde est courbé par une structure ferromagnétique (US06545462) afin de générer une composante verticale qui peut alors être mesurée par les éléments de Hall. On peut également mentionner des sondes à effet Hall utilisant une solution dite « Hall vertical » (EP1438755B1) et ne nécessitant pas de concentrateurs de flux.

Toutes ces sondes fournissent deux signaux déphasés de 90° et qui sont ensuite utilisés pour déduire l'angle du champ magnétique par l'intermédiaire d'un calcul d'arctangente. Les éléments magnétosensibles peuvent également être du type redondant, c'est-à-dire incluant à l'intérieur du même boîtier deux éléments magnétosensibles ceci afin d'assurer un niveau de fiabilité supérieur.

Une autre possibilité pour ce type de capteur est d'utiliser les sondes magnétorésistives, (exemple : HMC 1512 de Honeywell) qui comportent deux ponts de Wheatstone avec un angle de 45° entre eux, et dont les tensions de sortie dépendent de l'angle de champ magnétique de la façon suivante :
- pour le premier pont : ΔV=Vs·S·sin(2θ)
- pour le deuxième pont : ΔV=Vs·S·cos(2θ)
où l'angle θ représente l'angle entre la direction de l'aimantation et le courant dans l'élément magnétosensible, la course du capteur est donc limitée à 180 degrés ; Vs représente la tension d'alimentation, et S représente la constante liée au matériau magnétorésistif utilisé.

Dans les deux cas, la sonde fournit deux tensions de sortie, Vₓ et Vy, proportionnelles aux deux composantes du champ magnétique. La position angulaire du champ magnétique est, ensuite, obtenue en calculant arctan(*V*_{y}/*V*ₓ). L'algorithme de Cordic est souvent appliqué pour accélérer ce calcul, qui est soit effectué par un composant discret (exemple : MLX11201 de Melexis), soit par la sonde elle-même qui intègre la fonction de détection ainsi que le module de calcul d'arctangente.

Sachant que le capteur ne mesure pas l'amplitude du champ magnétique, mais uniquement son angle par rapport à un axe défini, ce montage est particulièrement insensible aux défauts géométriques (excentrations, décalages axiaux ...) qui peuvent se produire lors de la fabrication ou lors de l'utilisation du capteur. Cette mesure de direction n'est également pas affectée par la température.

Cette invention est illustrée par les figures suivantes:
- la figure 4 représente la structure générale du capteur,
- la figure 5 représente la tension fournie par la sonde et tension de sortie après décodage de l'arctangente,
- la figure 6 représente les lignes de champ magnétique présentes dans le capteur sur le segment d'extrémité de l'élément de transmission ferromagnétique,
- la figure 7 représente une vue d'une réalisation du capteur,
- les figures 8 à 10 représentent différentes réalisations de l'élément de transmission,
- les figures 11 à 13 montrent d'autres variantes d'élément de transmissions ferromagnétiques,
- la figure 14 représente une vue d'un capteur réalisé avec une pièce ferromagnétique monté par chassage sur le bout d'un axe réalisant la fonction de transmission du mouvement.

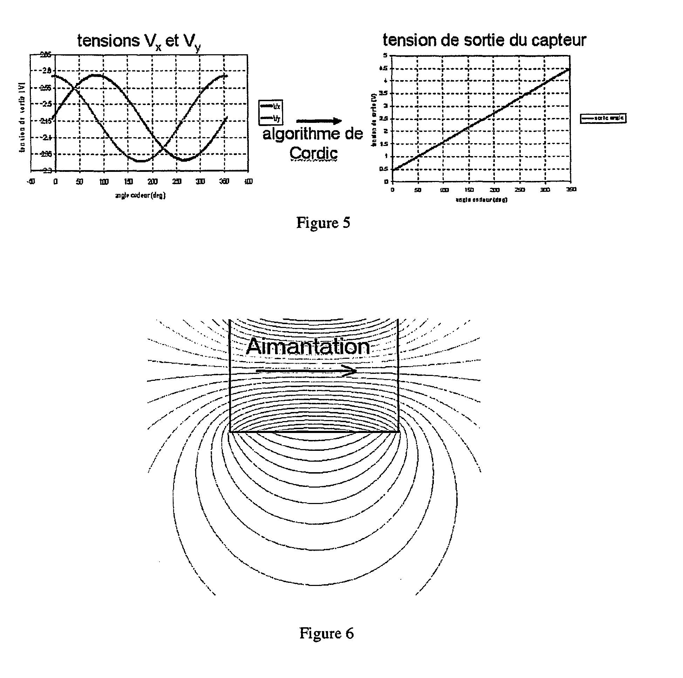

Sur la figure 4, la structure générale du capteur est représentée : un élément de transmission (3) ferromagnétique aimanté diamétralement, qui tourne au-dessus d'une sonde (4) mesurant le champ dans le plan perpendiculaire à l'axe de rotation. Les sorties de la sonde sont utilisées pour calculer la position angulaire (figure 5) .

La figure 6 montre les lignes de champ magnétique, en dessous de l'élément de transmission, qui passent par la sonde (4). L'orientation du champ magnétique y est diamétrale, et donc, elle indique la position angulaire de l'élément de transmission tournant par rapport à la sonde (4).

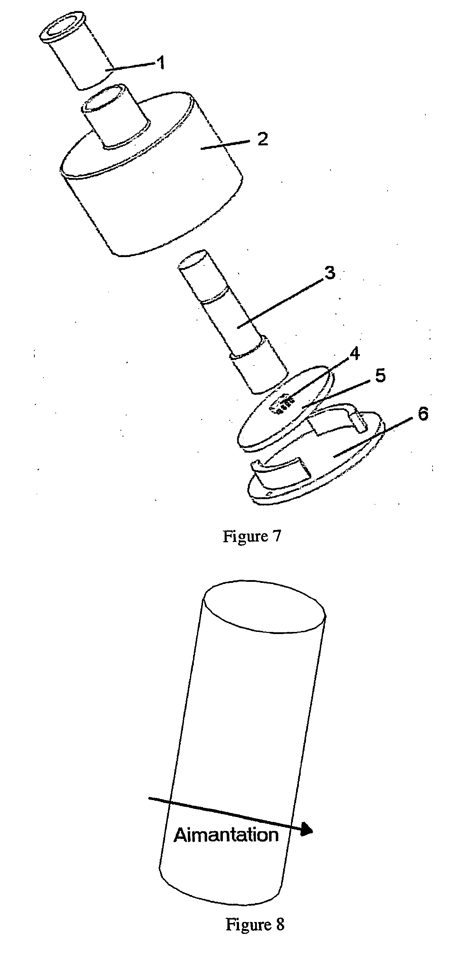

La figure 7 représente une réalisation du capteur avec les éléments suivants :
1 - palier en bronze,
2 - boîtier en plastique,
3 - élément de transmission ferromagnétique,
4 - sonde,
5 - PCB,
6 - couvercle.

La figure 8 représente un élément de transmission (3) ferromagnétique cylindrique aimanté selon une direction sensiblement diamétrale.

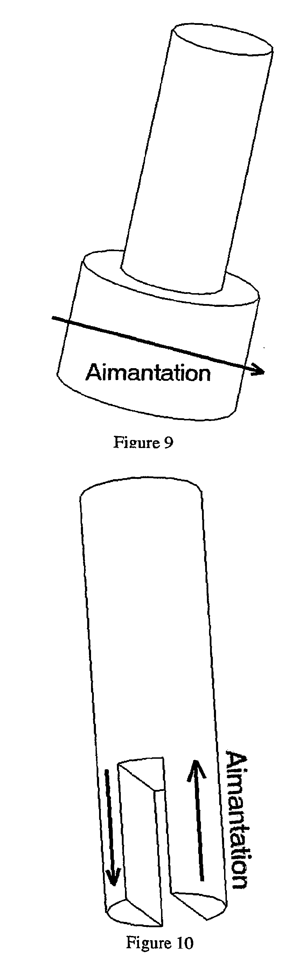

L'élément de transmission (3) montré dans la figure 9 est aimanté selon une direction sensiblement diamétrale et présente un élargissement (10) à l'extrémité.

La figure 10 représente un élément de transmission (3) avec deux bras (7, 8) aimantés axialement dans des sens antiparallèles, cela dans le but d'augmenter l'induction au niveau de l'élément magnétosensible. Ces bras (7, 8) présentent une section semi-circulaire et sont formés par l'extrémité cylindrique de l'élément de transmission usiné pour présenter une fente transversale (9). Les bras (7, 8) sont aimantés selon des directions parallèles à l'axe longitudinal, dans des sens inverses.

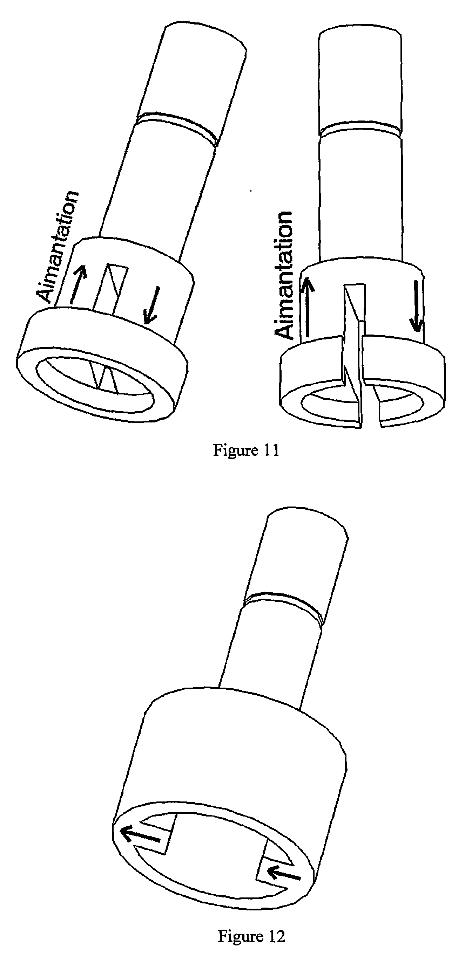

Les figures 11 à 13 représentent des vues d'élément de transmission (3) avec des formes spécifiques permettant de réaliser un blindage magnétique du capteur contre des perturbations extérieures pouvant affecter la lecture du capteur. Dans ce but, l'élément magnétosensible sera positionné sous la surface inférieure de l'élément de transmission (3), ce dernier présentant à son extrémité une forme sensiblement tubulaire (11, 12, 13, 14) venant entourer l'élément magnétosensible.

Dans l'exemple représenté en figure 11, l'élément de transmission (3) est prolongé par deux bras (7, 8) dont l'extrémité est entourée par une bague annulaire (11) fermée dont la section intérieure correspond au diamètre périphérie des bras (7, 8) et dont la section extérieure est supérieure à celle de l'élément de transmission (3).

Dans l'exemple représenté en figure 12, l'élément de transmission (3) est prolongé par deux bras (7, 8) dont l'extrémité est entourée par une bague annulaire (12) fendue.

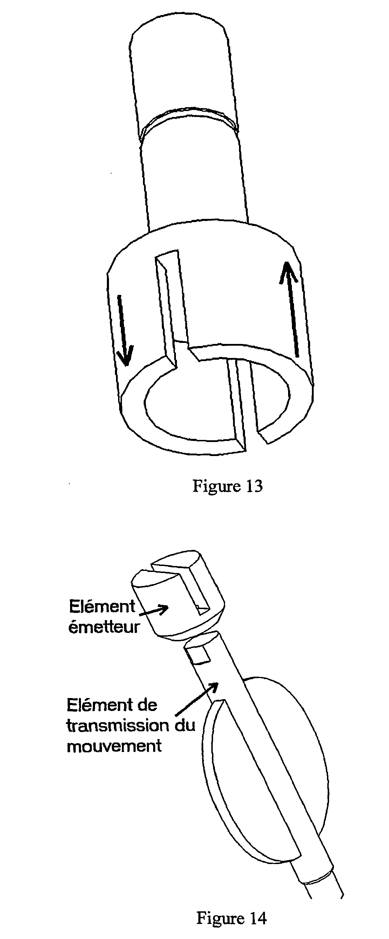

Dans l'exemple représenté en figure 13, l'élément de transmission (3) est prolongé par une bague annulaire (13) fermée présentant deux zones saillantes (15, 16) radialement, aimantées radialement.

Dans l'exemple représenté en figure 14, l'élément de transmission (3) est prolongé par une bague annulaire (13) fendue formant deux bras (17, 18), aimantés selon des directions parallèles à l'axe de l'élément de transmission, en sens opposés.

Pour certaines applications, il se peut que la fonction de transmission et la fonction de production de champ ne puissent pas être réalisées par le même élément. Dans ce cas, une pièce ferromagnétique (20) (élément émetteur de champ magnétique) peut être placée en bout de l'axe de transmission du mouvement par un moyen mécanique simple tel que le chassage (voir figure 14). Ce procédé d'assemblage est simple et assure une liaison mécanique d'une grande fiabilité. Le fait que le matériau constituant l'axe de transmission et l'élément émetteur soit de nature voisine (par exemple un acier) constitue un avantage au niveau de la fiabilité de la liaison mécanique avec les variations de température. En effet, les matériaux de ces deux éléments auront des dilatations thermiques identiques et donc il n'y aura aucun effet sur la tenue mécanique de cette liaison.

## Revendications

1. Capteur de position angulaire magnétique constitué d'un élément de transmission (3) du mouvement de rotation à mesurer et d'au moins un composant magnétosensible (4) capable de déterminer la variation du champ magnétique en fonction de la position angulaire dudit élément de transmission (3), ledit composant magnétosensible étant placé dans un plan perpendiculaire à l'axe de rotation de l'élément de transmission (3), et ledit élément de transmission (3) comprenant au moins un segment d'extrémité en regard dudit composant magnétosensible (4), **caractérisé en ce que** ledit élément de transmission (3) est réalisé en un matériau ferromagnétique ayant un champ coercitif Hc inférieur à 500 Oersted et une perméabilité réversible µr supérieure à 10.

2. Capteur de position angulaire magnétique sans contact selon la revendication 1, **caractérisé en ce que** ledit matériau ferromagnétique présente un champ coercitif Hc compris entre 30 et 500 Oersted.

3. Capteur de position angulaire magnétique sans contact selon la revendication 1, **caractérisé en ce que** l'organe de transmission du mouvement est réalisé intégralement en un matériau ferromagnétique ayant un champ coercitif Hc inférieur à 500 Oersted.

4. Capteur de position angulaire magnétique sans contact selon la revendication 1, dont l'élément magnétosensible est une sonde (4) magnétorésistive, capable de mesurer les deux composantes du champ magnétique dans le plan perpendiculaire à l'axe de rotation.

5. Capteur de position angulaire magnétique sans contact selon la revendication 1, dont l'élément magnétosensible est une sonde (4) GMR (à effet magnétorésistif géant) capable de mesurer les deux composantes du champ magnétique dans le plan perpendiculaire à l'axe de rotation.

6. Capteur de position angulaire magnétique sans contact selon la revendication 1, dont l'élément magnétosensible est une sonde (4) à effet Hall à concentrateur de flux intégrés destinée à mesurer le champ magnétique dans le plan perpendiculaire à l'axe de rotation.

7. Capteur de position angulaire magnétique sans contact selon la revendication 1, dont l'élément magnétosensible est une sonde (4) à effet Hall intégrant la technologie « Hall vertical » mesurant le champ magnétique dans le plan perpendiculaire à l'axe de rotation.

8. Capteur de position angulaire magnétique sans contact selon l'une quelconque des revendications précédentes, **caractérisé en ce que** le segment d'extrémité ferromagnétique (10 à 14) ayant un champ coercitif Hc inférieur à 500 Oersted présente une section supérieure à la section de l'élément de transmission (3) dont il constitue un prolongement.

9. Capteur de position angulaire magnétique sans contact selon l'une quelconque des revendications 1 à 7, **caractérisé en ce que** le segment d'extrémité ferromagnétique ayant un champ coercitif Hc inférieur à 500 Oersted est constitué par un élément cylindrique (10) prolongeant l'élément de transmission (3) du capteur, et présentant une section supérieure à la section de l'élément de transmission (3) dont il constitue un prolongement.

10. Capteur de position angulaire magnétique sans contact selon l'une quelconque des revendications précédentes, **caractérisé en ce que** l'élément de transmission (3) présente une extrémité fendue, formant deux bras (7, 8) en un matériau ferromagnétique ayant un champ coercitif Hc inférieur à 500 Oersted.

11. Capteur de position angulaire magnétique sans contact selon la revendication précédente, **caractérisé en ce que** ladite extrémité est constituée par une fente présentant deux bras axiaux (7, 8) aimantés axialement dans des sens antiparallèles.

12. Capteur de position angulaire magnétique sans contact selon la revendication 10, **caractérisé en ce que** lesdits bras axiaux (7, 8) sont semi-tubulaires.

13. Capteur de position angulaire magnétique sans contact selon la revendication 10 **caractérisé en ce que** lesdits bras axiaux (7, 8) sont semi-cylindriques.

14. Capteur de position angulaire magnétique sans contact selon l'une quelconque des revendications 10 à 13 **caractérisé en ce que** lesdits bras axiaux (7, 8) présentent un épaulement annulaire.

15. Capteur de position angulaire magnétique sans contact selon l'une quelconque des revendications 10 à 13 **caractérisé en ce que** chacun desdits bras axiaux (7, 8) présente un épaulement semi-annulaire.

16. Capteur de position angulaire magnétique sans contact selon l'une quelconque des revendications 10 à 13 **caractérisé en ce que** les bras axiaux (7, 8) sont entourés par un épaulement annulaire (11, 12).

17. Capteur de position angulaire magnétique sans contact selon l'une quelconque des revendications 1 à 9, **caractérisé en ce que** l'élément de transmission (3) présente une extrémité tubulaire creuse, présentant deux protubérances internes (15, 16) disposées radialement et diamétralement opposées, lesdites protubérances étant réalisées en un matériau ferromagnétique ayant un champ coercitif Hc inférieur à 500 Oersted.

18. Capteur magnétique rotatif selon l'une quelconque des revendications précédentes, dont l'élément magnétosensible et le bloc de calcul d'angle sont intégrés en un seul composant.

## Patentansprüche

1. Magnetischer Sensor der Winkelposition, bestehend aus einem Übertragungselement (3) der zu messenden Rotationsbewegung und aus wenigstens einem magnetisch sensiblen Element (4), das zur Bestimmung der Abweichung des Magnetfeldes in Abhängigkeit von der Winkelposition des genannten Übertragungselements (3) in der Lage ist, wobei das genannte magnetisch sensible Element in einer zur Rotationsachse des Übertragungselements (3) lotrechten Ebene platziert ist und das genannte Übertragungselement (3) wenigstens ein Endsegment gegenüber dem genannten magnetisch sensiblen Element (4) umfasst, **dadurch gekennzeichnet, dass** das genannte Übertragungselement (3) aus einem ferromagnetischen Material realisiert ist, das ein Zwangsfeld Hc mit weniger als 500 Oersted und eine reversible Permeabilität µr von mehr als 10 hat.

2. Magnetischer Sensor der Winkelposition ohne Kontakt gemäß Anspruch 1, **dadurch gekennzeichnet, dass** das genannte ferromagentische Material ein Zwangsfeld Hc aufweist, das zwischen 30 und 500 Oersted inbegriffen ist.

3. Magentischer Sensor der Winkelposition ohne Kontakt gemäß Anspruch 1, **dadurch gekennzeichnet, dass** das Übertragungsorgan der Bewegung komplett aus einem ferromagnetischen Material realisiert ist, das ein Zwangsfeld HC von weniger als 500 Oersted hat.

4. Magnetischer Sensor der Winkelposition ohne Kontakt gemäß Anspruch 1, dessen magnetisch sensibles Element eine magnetoresistive Sonde (4) ist, die in der Lage ist, die zwei Komponenten des Magnetfeldes in der zur Rotationsachse lotrechten Ebene zu messen.

5. Magnetischer Sensor der Winkelposition ohne Kontakt gemäß Anspruch 1, dessen magnetisch sensibles Element eine Sonde (4) GMR (mit magnetoresistiver Riesenwirkung) ist, die in der Lage ist, die zwei Komponenten des magnetischen Feldes in der zur Rotationsachse lotrechten Ebene zu messen.

6. Magnetischer Sensor der Winkelposition ohne Kontakt gemäß Anspruch 1, dessen magnetisch sensibles Element eine Sonde (4) mit Halleffekt mit Konzentrator integrierter Flüsse ist, die zur Messung des Magnetfeldes in der zur Rotationsachse lotrechten Ebene bestimmt ist.

7. Magnetischer Sensor der Winkelposition ohne Kontakt gemäß Anspruch 1, dessen magnetisch sensibles Element eine Sonde (4) mit Halleffekt ist, die die Technologie "vertikales Hall" beinhaltet, welche das Magnetfeld in der zur Rotationsachse lotrechten Ebene misst.

8. Magnetischer Sensor der Winkelposition ohne Kontakt gemäß einem der voranstehenden Ansprüche, **dadurch gekennzeichnet, dass** das ferromagnetische Endsegment (10 bis 14), das ein Zwangsfeld Hc von weniger als 500 Oersted hat, einen Querschnitt aufweist, der größer ist als der Querschnitt des Übertragungselements (3), dessen Verlängerung er bildet.

9. Magnetischer Sensor der Winkelposition ohne Kontakt gemäß Anspruch 1 bis 7, **dadurch gekennzeichnet, dass** das ferromagnetische Endsegment, das ein Zwangsfeld Hc von weniger als 500 Oersted hat, durch ein zylindrisches Element (10) gebildet wird, das das Übertragungselement (3) des Sensors verlängert, und einen Querschnitt aufweist, der größer ist als der Querschnitt des Übertragungselements (3), dessen Verlängerung er aufweist.

10. Magnetischer Sensor der Winkelposition ohne Kontakt gemäß einem der voranstehenden Ansprüche, **dadurch gekennzeichnet, dass** das Übertragungselement (3) ein gespaltenes Ende aufweist, das zwei Zweige (7, 8) aus einem ferromagnetischen Material mit einem Zwangsfeld Hc von weniger als 500 Oersted bildet.

11. Magnetischer Sensor der Winkelposition ohne Kontakt gemäß dem voranstehenden Anspruch, **dadurch gekennzeichnet, dass** das genannte Ende durch einen Schlitz gebildet wird, der zwei axiale Zweige (7, 8) aufweist, die axial in antiparallelen Richtungen magnetisiert sind.

12. Magnetischer Sensor der Winkelposition ohne Kontakt gemäß Anspruch 10, **dadurch gekennzeichnet, dass** die genannten axialen Zweige (7, 8) halb röhrenförmig sind.

13. Magnetischer Sensor der Winkelposition ohne Kontakt gemäß Anspruch 10, **dadurch gekennzeichnet, dass** die genannten axialen Zweige (7, 8) halb zylindrisch sind.

14. Magnetischer Sensor der Winkelposition ohne Kontakt gemäß Anspruch 10 bis 13, **dadurch gekennzeichnet, dass** die genannten axialen Zweige (7, 8) einen ringförmigen Absatz aufweisen.

15. Magnetischer Sensor der Winkelposition ohne Kontakt gemäß Anspruch 10 bis 13, **dadurch gekennzeichnet, dass** jeder der axialen Zweige (7, 8) einen halb ringförmigen Absatz aufweist.

16. Magnetischer Sensor der Winkelposition ohne Kontakt gemäß Anspruch 10 bis 13, **dadurch gekennzeichnet, dass** die axialen Zweige (7, 8) durch einen ringförmigen Absatz (11, 12) eingefasst sind.

17. Magnetischer Sensor der Winkelposition ohne Kontakt gemäß Anspruch 1 bis 9, **dadurch gekennzeichnet, dass** das Übertragungselement (3) ein hohles, röhrenförmiges Ende aufweist, das zwei interne Protuberanzen (15, 16) aufweist, die radial und diametral entgegengesetzt angeordnet sind, wobei die genannten Protuberanzen aus einem ferromagnetischen Material realisiert sind, das ein Zwangsfeld Hc von weniger als 500 Oersted hat.

18. Rotierender magnetischer Sensor gemäß einem der voranstehenden Ansprüche, dessen magnetisch sensibles Element und der Winkelberechnungsblock in einem einzigen Element integriert sind.

## Claims

1. A magnetic angular position sensor composed of a member transmitting (3) the rotation movement to be measured and at least one magneto-sensitive component (4) able to determine the variation of the magnetic field relative to the angular position of said transmission element (3), with said magneto-sensitive element (3) being positioned in a plane perpendicular to the axis of rotation of the transmission element (3), and said transmission element (3) comprising at least one end segment opposite said magneto-sensitive component (4), **characterized in that** said transmission element (3) is made of a ferromagnetic material having a coercive field strength Hc of less than 500 Oersted and a reversible permeability µr greater than 10.

2. A contactless magnetic angular position sensor according to claim 1, **characterized in that** said ferromagnetic material has a coercive field strength Hc between 30 and 500 Oersted.

3. A contactless magnetic angular position sensor according to claim 1, **characterized in that** the member transmitting the movement is integrally made of a ferromagnetic material having a coercive field strength Hc of less than 500 Oersted.

4. A contactless magnetic angular position sensor according to claim 1, the magneto-sensitive element of which is a magneto-resistive probe (4) able to measure both components of the magnetic field in the plane perpendicular to the axis of rotation.

5. A contactless magnetic angular position sensor according to claim 1, the magneto-sensitive element of which is a GMR (giant magneto-resistive effect) probe (4) able to measure both components of the magnetic field in the plane perpendicular to the axis of rotation.

6. A contactless magnetic angular position sensor according to claim 1, the magneto-sensitive element of which is a Hall effect probe (4) with an integrated flux concentrator intended for measuring the magnetic field in the plane perpendicular to the axis of rotation.

7. A contactless magnetic angular position sensor according to claim 1, the magneto-sensitive element of which is a Hall effect probe (4) integrating the "vertical Hall" technology measuring the magnetic field in the plane perpendicular to the axis of rotation.

8. A contactless magnetic angular position sensor according to any one of the preceding claims, **characterized in that** the ferromagnetic end segment (10 to 14) having a coercive field strength Hc of less than 500 Oersted has a section greater than the section of the transmission element (3) of which it is an extension.

9. A contactless magnetic angular position sensor according to any one of claims 1 to 7, **characterized in that** the ferromagnetic end segment having a coercive field strength Hc of less than 500 Oersted is made of a cylindrical element (10) extending the transmission element (3) of the sensor, and having a section greater than the section of the transmission element (3) of which it is an extension.

10. A contactless magnetic angular position sensor according to any one of the preceding claims, **characterized in that** the transmission element (3) has a split end, forming two arms (7, 8), made of a ferromagnetic material having a coercive field strength Hc of less than 500 Oersted.

11. A contactless magnetic angular position sensor according to the preceding claim, **characterized in that** said end includes a slot having two axial arms (7, 8) axially magnetized in anti-parallel directions.

12. A contactless magnetic angular position sensor according to claim 10, **characterized in that** said axial arms (7, 8) have a semi-tubular shape.

13. A contactless magnetic angular position sensor according to claim 10, **characterized in that** said axial arms (7, 8) have a semi-cylindrical shape.

14. A contactless magnetic angular position sensor according to any one of claims 10 to 13, **characterized in that** said axial arms (7, 8) have an annular shoulder.

15. A contactless magnetic angular position sensor according to any one of claims 10 to 13, **characterized in that** each one of said axial arms (7, 8) has a semiannular shoulder.

16. A contactless magnetic angular position sensor according to any one of claims 10 to 13, **characterized in that** the axial arms (7, 8) are surrounded by an annular shoulder (11, 12).

17. A contactless magnetic angular position sensor according to any one of claims 1 to 9, **characterized in that** the transmission element (3) has a hollow tubular end, having two diametrally opposite inner protrusions (15, 16) positioned radially, with said protrusions being made of a ferromagnetic material having a coercive field strength Hc of less than 500 Oersted.

18. A rotating magnetic sensor according to any one of the preceding claims, the magneto-sensitive element and angle calculation block of which are integrated into a single component.
